Europäisches Patentamt

**European Patent Office**

Office européen des brevets

(11) Publication number: **0 140 416**
**B1**

# EUROPEAN PATENT SPECIFICATION

(45) Date of publication of patent specification: **21.09.88**

(51) Int. Cl.⁴: **C 08 J 9/36, B 29 C 67/22**

(21) Application number: **84201356.7**

(22) Date of filing: **21.09.84**

(54) **Procedure to manufacture shaped products with an expanded material, and products made with such procedure.**

(30) Priority: **18.10.83 IT 8347683**

(43) Date of publication of application:
**08.05.85 Bulletin 85/19**

(45) Publication of the grant of the patent:
**21.09.88 Bulletin 88/38**

(84) Designated Contracting States:
**AT BE CH DE FR GB LI LU NL SE**

(56) References cited:
**CH-A- 499 577**
**DE-A-2 946 540**
**FR-A-2 211 341**
**FR-A-2 249 124**
**GB-A-1 001 464**
**US-A-3 114 722**
**US-A-3 853 652**

**CHEMICAL ABSTRACTS, vol. 89, no. 22, November 1978, page 42, no. 180952f, Columbus, Ohio, US**

(73) Proprietor: **Vazzola, Luigi**
**Via Roveredo, 2**
**I-33170 Pordenone (IT)**

(73) Proprietor: **Ortner, Gottfried**
**Via Revedole, 76**
**I-33170 Pordenone (IT)**

(72) Inventor: **Ortner, Gottfried**
**Via Revedole, 76**
**I-33170 Pordenone (IT)**

(74) Representative: **Petraz, Gilberto Luigi**
**G.L.P. S.a.s. di Gilberto Petraz P.le Cavedalis 6/2**
**I-33100 Udine (IT)**

Courier Press, Leamington Spa, England.

## Description

This invention concerns a procedure for the formation of products with an expanded material. The invention also concerns products made with such procedure.

To be more exact, the invention envisages the formation of products by spontaneous mixing of two components, which unite and thus lead to the formation of a foamed product.

Procedures are known which are intended to obtain foamed materials having closed or open cells.

A first known procedure discloses the mixing of two or more components, for instance a resin and a catalyst, and the casting or injection of the mixture thus obtained into a mould. The expansion of the mixture takes place within the mould itself.

A first drawback of this known art lies in the fact that the components have to be mixed before being introduced into the mould.

Another drawback lies in the fact that the time of introduction of the mixture into the mould has to be controlled and, of necessity, restricted if it is desired that expansion will begin only after the introduction of the components into the mould has been completed.

Another known procedure envisages introduction of the expandable material into the mould together with a gas able to form the cells within the material itself.

In any event this art envisages that material already mixed is introduced into the mould. Such material may include a resin and an accelerator as well as the gas, or else a resin which expands as a result of the negative pressure occurring after the departure of the resin from an appropriate injection device and which hardens spontaneously.

According to this art there are needed at least an injection device and also cylinders or generators of gas under pressure.

The injection moulding, for instance, of panels having an inner layer of foamed polyurethane or other foamed resins is known. Such panels are used commonly in the field of thermal insulation.

In any event, whatever the specific application may be, the known art generally envisages the introduction of already mixed components into the mould and their hardening thereafter, with the resulting drawbacks listed above.

Procedures are also known in which the foaming of the material is obtained by catalysis of a prepolymer with subsequent expansion.

Patent US-A-3,853,652 discloses a procedure in which a layer of material is impregnated with an aqueous catalyst. A prepolymer mixed beforehand with materials suitable for conducting water, such as fibrous substances or the like, is spread on such layer of material. A further layer of material impregnated with an aqueous catalyst is then superimposed; the latter diffuses into the prepolymer, which forms a foam and hardens.

Patent DE-A-2.946.540 discloses a procedure in which a granular carrier is impregnated with moisture and is then coated with a prepolymer, which reacts with the moisture and forms a foam. As an alternative, the granules of the carrier can be coated directly with a mixture of prepolymer and water.

From the patents US-A-3.114.722 and FR-A-2.249.124 is known a procedure to fabricate shaped products by using two components, in which a component capable of foaming and hardening is brought into contact with another component and in which the foaming and hardening take place as a result of the spreading of the foaming component into the space where the other component lies.

Specifically the patent FR-A-2.249.124 provides for the use of balls of clay humidified beforehand and then mixed with a prepolymer.

It provides for an incoherent material in a loose state which is mixed with the prepolymer.

It thus requires three specific features, namely a loose material, a humid material and mixing.

The humidity component together with the mixing reduces the time for the auxiliary operations to be performed after the prepolymer has been poured.

The patent US-A-3.114.722 discloses instead to save materials which would otherwise be wasted.

It provides for small pieces of material, a mixture containing an aqueous catalyst, a mixing process and a source of heat to heat the whole mixture.

The source of heat serves to accelerate the production of foam.

Patent FR-A-2.211.341 discloses a procedure comprising injection of a prepolymer under pressure into a mould holding a carrier impregnated beforehand with water.

Patent GB-A-1,001,464 discloses a procedure with a supply of heat such as to provide a maximum temperature not less than 120°C within a polyurethane material. The purpose of this is to obtain expansion and hardening of the polyurethane.

Patent CH-A-499.577 discloses a generic procedure to obtain foamed products by agglomerating particles of a granular material by means of a different material, which can be a thermoplastic material or a synthetic material that can be hardened.

A procedure which is also a part of the known art discloses a procedure to obtain polyurethane rolls by winding a treated fabric in the presence of moisture.

The basis of the procedure of the present invention lies in the fact that the components are pre-arranged physically separately.

The invention envisages the employment, as an initial carrier of one of the components, of a substantially granular or spongy filler in which some channels are present.

These channels can have diverse conformations and, particularly in the case of granular fillers, will be spaces substantially of a triangular channel type according to Gibbs.

The component not supported by the filler is brought into contact with a surface of the filler itself. For instance this second component can be disposed on the walls of a mould the walls being smeared superficially with the second component or having a layer thoroughly impregnated with such component. It is also possible to apply the second component by spraying or other like methods.

Again according to the invention, at least one of the components can be applied by being cast, for example, onto the surface of a carrier impregnated beforehand with the other component.

The invention also envisages the injection of at least one of the components at least within a zone of the carrier or within part of the mould, if the latter is used.

According to the invention it is possible to pre-arrange two layers of carrier, one for one component and one for the other component, and to bring these two layers into contact thereafter.

It is also possible to pre-arrange one layer or support carrier onto which the components are delivered, for instance, onto separate surfaces.

For example, it is possible to have a carrier in the form of a porous panel, onto opposite faces of which the two components are deliverd (by spraying or casting or otherwise) and spread and come into contact with each other inside the carrier. The product thus made will comprise two layers separated by a transition zone.

According to the invention the components, however they may be pre-arranged separately, mix with each other by capillary diffusion within the above-mentioned channels contained at least within the carrier, or filler, which supports one of the components.

The mixing therefore takes place after the pre-arrangement of the components in correspondence with the layer to be formed, the components being brought into contact with one another on a surface without prior mixing.

In traditional materials the spaces of Gibbs remain open. The result will be, for example, the formation of condensate, the lack of a seal against vapour, etc.

Instead, in the material of the invention the Gibbs cells are closed by the diffusion and expansion of the resin or polymer.

One advantage of the present invention is the ability to employ a mould. the components being introduced at momentarily separated times which are pre-set; in this way it is possible to have all the time required to pre-arrange the mould itself, even with substantially three-dimensional dispositions.

Another advantage of the invention is that it does not require auxiliary equipment or apparatus of any kind, apart from moulds where necessary.

A further advantage of the invention is that it enables products to be formed by free expansion, namely without a mould. In fact, such products require only a support for at least one of the components in the forming process.

As we said earlier, the invention envisages the use of fillers which remain incorporated in the resulting product.

Such fillers may consist of a variety of granular or fibrous materials such as, for instance, vermiculite, perlite, expanded clay, spheroidal foamed polystyrol (Styropor BASF, for example), scrap consisting of granular foamed polystyrol, chips, saw dust, granular cork, sand or still other materials, depending on the end properties (density, porosity, thermal resistance, etc.) which it is desired to obtain.

According to a variant, for particular types of products it is possible by thermal or chemical means to eliminate or reduce the filler introduced. In this way a material having open communicating cells can be produced.

Many types of plastic materials offer the ability to make foamed products; by selecting a suitable material and production technique it is possible to obtain a very wide range of variations from the mechanical, physical, thermal and chemical points of view.

Among the macromolecules theoretically suitable for the manufacture of expanded products the following raw materials have in practice become established so far:

natural and synthetic rubber,
polyvinyl chloride,
polystyrol,
condensate of urea resins,
phenol and formaldehyde condensate,
polyadducts of diisocyanate,
viscose,
polyvinyl acetal, and
polyethylene.

According to the invention resins which harden in union with a catalyst can be employed as components to obtain expansion.

For instance, one of the following resins can be used as a suitable component: Desmodur® Bayer E21, Desmodur Bayer E22, a polyisocyanate prepolymer or others again which are able to provide hardening and expansion according to the invention.

As a catalyst to be employed with such resins, a possible formulation will be the following:

water 700 grs.
Bayer stabilizer OS 25 20 grs.
Bayer Desmorapid® PS 207 3 grs.
Bayer Desmorapid DB 4 grs.
Bayer Desmorapid SO 4 grs.

It may also be possible to employ water alone, but in this case the expansion of the invention does not take place in the best manner.

According to the invention the speed of reaction can be conditioned. This can be done, for instance, by the application or reduction of heat or by exposure to radiations of a suitable frequency, for instance radio frequency.

The invention therefore consists of a procedure to manufacture shaped products composed at least partially of an expanded material, such expanded material being obtained by starting with at least two components of which at least one is able to expand and at least partially to cure or harden when brought into contact with the other component, the two components being pre-arranged physically separately and with at least one momentary contact surface, such other component cooperating at least initially with a carrier filler, the procedure being characterized by the fact that the expansion and cure or hardening take place as a result of the diffusion of the component able to expand and harden, through such surface into the space where the other component is present.

The invention is also embodied with a product composed at least partially of an expanded material, the product being obtained by means of the above procedure.

We shall describe hereinafter the procedure of the invention and also some variants of the same with the help of the attached figures, which are given as a non-restrictive example and in which:

Figs. 1a 1b and 1c show the formation of a panel with two outer layers spaced apart and an inner layer of filler;

Figs. 2a 2b and 2c show the formation of a panel, starting with a fibrous carrier;

Figs. 3a 3b and 3c show the lining of a tubular product;

Figs. 4a and 4b show a possible variant of the procedure of the invention;

Figs. 5a 5b and 5c show a further variant.

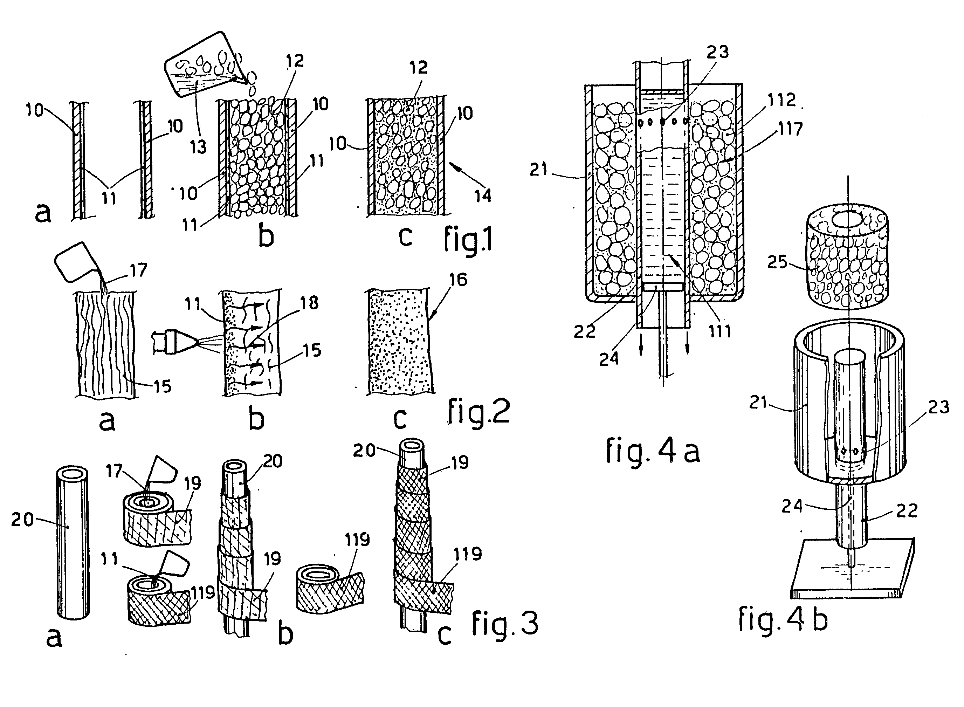

With reference to the figures we can see in Fig. 1a two walls 10 for the formation of a sandwich panel. The walls 10 can be kept spaced apart with the help of a mould, which is not shown here.

The inner surfaces of the walls 10 are laid up (Fig. 1a) with a prepolymer 11 (the quantity depending on the thickness of the shaped body to be produced and on its relative density), or else if the shaped bodies are to include a reinforcement (fibreglass fabric or fabrics such as jute, for example, etc.), such reinforcement is laid up by hand or by machine together with the prepolymer 11 and the laid-up side is positioned towards the inside of the mould, which is still empty.

A granular filler material 12 (having spheroidal, cubic, cylindrical or prismatoid granules) is impregnated, within a suitable receptacle 13 for instance, with a hardener component or catalyst and is poured into the space between the walls 10.

If a mould or frame is being used, the degree of filling should preferably be such that, when the mould is closed, the granular filler is slightly subjected to pressure.

In this way the edge surfaces of the particles of the filler material 12 form a polyhedral structure and therefore substantially triangular channels in accordance with Gibbs with the power of capillary aspiration.

According to a variant the formation of triangular channels in accordance with Gibbs can also be obtained by partially welding together the granules composing the filler material 12. The partial welding can be obtained, for instance, by applying heat to the filler. The filler material 12 can also be subjected to radiations, for instance at radio frequency, so as to obtain the partial welding action.

When the mould is closed or, in any event, when the filler 12 has been introduced, the prepolymer molecules begin to penetrate from the covering layers, and from the inner sides of the mould respectively, into the Gibbs channels where the catalyst is present. The catalysis process with formation of foam begins at once or almost at once.

So as to accelerate or possibly slow down this process. it is possible to take corrective action with external means such as the application or reduction of heat, exposure to radio frequencies, etc.

Acceleration of the reaction enables the quantity of diffusing component employed to be reduced.

In particular, according to tests conducted by the present applicants, it is found to be very practical to use radiations at radio frequency so as to condition the speed of reaction.

The excess quantity of catalyst still present in the triangular Gibbs channels is thrust out of such channels by the prepolymer, which is expanding, onto the inner surfaces of the walls 10 or onto the reinforcements, if any, treated with the prepolymer. The prepolymer 11 on the walls 10 thus forms a foam and hardens without any prior mixing process.

After a given time, which depends on the volume of the shaped body to be produced, the formation and hardening process is ended and a sandwich panel 14 is obtained.

If reinforcements impregnated with prepolymer 11 are employed, the walls 10 of the mould will be coated with release agents such as waxes, fats or plastic films or other materials, which are known in themselves in the art in a great variety of types.

As an alternative the prepolymer 11 can be pre-arranged, by being sprayed for instance, directly on the layer of release agent present on the walls 10 of the mould.

Where moulds or frames are employed and the walls 10 are not permeable to the prepolymer 11, such moulds need not be treated with release agents.

The procedure hitherto described can be varied as follows (Figs.2).

Preformed bodies 15 having the shape of the final body to be produced are obtained with the suitable filler particles mentioned earlier.

It should be noted that, when the individual particles are united and pressed together, only a maximum of 20% of the triangular Gibbs channels formed by means of the bonding means employed (adhesives, synthetic resins, high frequency welding, etc.) is closed.

A network of triangular Gibbs channels is formed in this way in the preformed body 15, and therefore a capacity of capillary absorption in the preformed body 15 is obtained.

As an alternative the preformed body 15 can be made of a fibrous or spongy material, such as mat, mineral wool, chip board, sponge or a like material provided that it is substantially porous.

If such preformed bodies 15 are in the form of panels or the like, they can have a covering layer on one side. In this way it is possible to obtain on their usage site a thermal, acoustic or damp-proof lining or insulation, among other things for old or new masonry composed of very different materials.

Such preformed body 15, with or without a covering layer on one side, is treated (soaked, impregnated, etc.) with a catalyst 17 until it has been impregnated to the required degree. The prepolymer 11 is then applied to at least one surface of the preformed body 15.

Where a covering layer is present, the prepolymer 11 will be applied to parts of the preformed body which do not comprise such a layer.

In the example shown the prepolymer 11 is sprayed onto the body 15.

The prepolymer 11 thus applied spreads by capillary action (as per the arrows 18) within the preformed body 15 and produces a foam inside.

When hardening has ended, a product 16 obtained by means of the preformed body 15 has been made.

A possible application of this variant of the procedure of the invention could be the following.

A wall, consisting of masonry for instance, to be insulated is laid-up with prepolymer 11. The preformed bodies 15, possibly provided with covering layers opposite to the wall to be insulated, are kept at a distance from the wall and in a direction required, perhaps by means of an expendable framework applied to the wall beforehand.

The open channels containing catalyst 17 in the preformed body 15 are filled and therefore are filled with foam by the prepolymer 11 as a result of capillary absorption within the preformed body 15.

The possible covering layer fixed provisionally to the preformed body 15 is also connected by means of this procedure at the same time after the hardening.

The covering layer, preformed foamed body 15 and wall to be insulated thus form a solidly united whole when hardening has been completed.

Lack of flatness and other faults in or on the wall to be lined are eliminated in this way.

The procedure described serves preferably for the production of bodies of expanded materials or panels having a big surface and a high content of filler materials, for such bodies can be laid up on all their sides and be reinforced on one side or two sides or on all their sides.

In any event, the filler material holding the catalyst in the preformed body 15 and the connecting resin which forms the foam do not have to be mixed mechanically or by hand.

The procedure is especially suitable for the production on site of plates, panels, linings and shaped bodies.

According to another variant it is possible to produce insulating bodies or tubular supporting bodies by means of a winding procedure (Figs.3).

A tape containing cells, such as a woven fabric 19-119, can be employed as a filler material and, at the same time, as a reinforcement.

The rolls of such woven fabric 19-119 can possibly be enclosed in containers so as to be able to carry out impregnation of one roll 19 with catalyst 11 and of the other roll 119 with resin 17, or a component suitable for hardening, without any losses and without dirtying the hands and working equipment.

In the example of Fig.3a such impregnation is shown diagrammatically with pouring of the components 11-17 on the respective rolls of supporting tape 19-119. A tubular core 20 is first lined with one 19 of the two impregnated rolls and thereafter with the other 119 (Figs-3b and 3c).

The reciprocal diffusion and mixing of the two components 11-17 in the capillary spaces of the tapes 19-119 causes the formation of foam and hardening.

This procedure can be applied to the insulation cladding of pipes and also as a replacement for traditional orthopaedic plaster casts after the limb concerned has been lined beforehand with a separator layer impermeable to the components employed.

If it is required to obtain an independent tubular lining, the tubular core 20 is coated beforehand with a layer of release agent.

Figs.4a and 4b show a further variant of the procedure of the invention. Under this variant a cylinder 22 having outlet holes 23 can slide within a mould 21. A stationary piston 24 closes the cylinder 22 at its lower end.

The cylinder 22 is filled with one 111 of the two components. Filler material 112 impregnated with the other component 117 is introduced; the material 112 may possibly be compressed to suit the final density required.

The cylinder 22 is lowered, thus causing the component 111 to be sprayed from the holes 23. The component 111 spreads within the material 112, thus forming a foam and becoming hard in contact with the component 117 contained in the filler material 112.

The resulting product 25 is withdrawn (Fig.4b), the walls of the mould 21 and cylinder 22 having been coated beforehand with a release agent.

Hollow bodies can be readily formed with this variant. For instance, a possible application of this variant can be the formation of grinding wheels, the filler 112 in such a case being composed of an abrasive material.

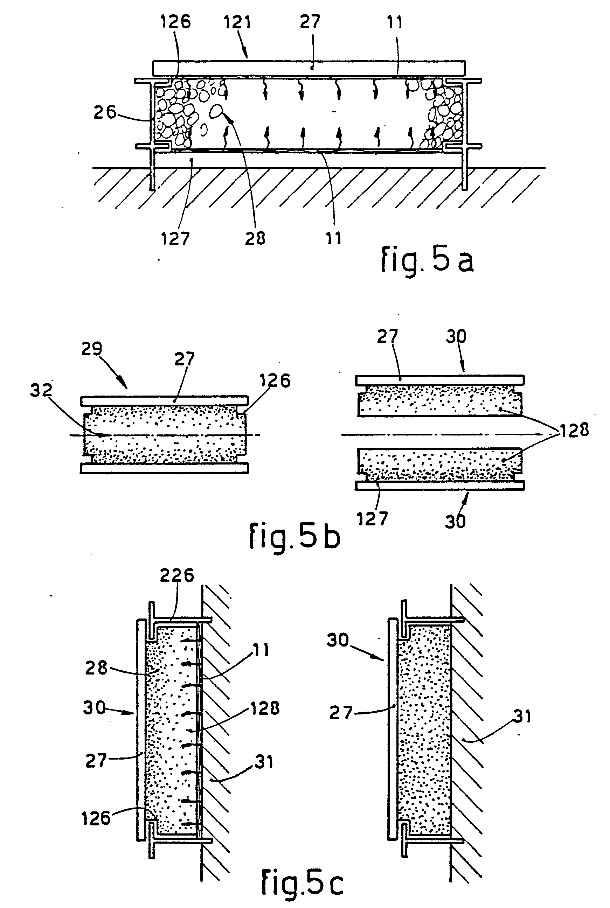

Figs. 5 show a further variant intended to obtain products suitable for forming an insulating lining for walls.

According to this variant a mould 121 has guides 26 able to cooperate with profiles 126. The profiles 126 are solidly fixed to a covering tile 27 made, for example, of stoneware or another lining material. A like tile 127 is positioned at the bottom of the mould 121.

The mould 121 can be closed at its front and rear with walls, which are not shown here and can be embodied in any known way.

The tiles 27-127 are treated with a layer of a component 11 able to expand and there is introduced between them 27-127 a porous shaped layer 28 consisting, for instance, of a polystyrol such as BASF Styropor or another.

The layer 28 is impregnated beforehand with a catalyst according to the methods described earlier.

The thickness of the liquid film of component 11 is selected in such a way as to lead to diffusion and subsequent expansion within the layer 28 to a depth which does not reach the centre line of the layer 28.

Thus, when expansion has ended (Fig. 5b), the layer 28 has a central zone which has not expanded 32.

The partial product 29 thus obtained is withdrawn from the mould 121 and is cut in half, thereby providing two products 30 ready to be applied to a wall and having layers 128 comprising one free and not expanded face.

Such application to a wall can take place as shown in Fig. 5c; a wall 31, equipped with guides 226 able to cooperate with profiles 126 of a product 30, is coated with a liquid layer 11 of prepolymer.

The layer 128, impregnated with accelerator on its side facing the wall 31, is applied to the wall 31 itself and is kept in place by guides 226 cooperating with profiles 126.

The liquid layer 11 spreads within the layer 128, expands and hardens. Moreover, the product 30 is thus glued automatically to the wall 31.

The complete lining of the wall 31, for insulation cladding purposes for example, can be formed with further neighbouring products 30.

## Claims

1. Procedure to manufacture products composed at least partially of an expanded material (14-16-25-30), such expanded material being obtained by starting with at least two components (11-17) of which at least one (11) is able to expand and at least partially to cure or harden when brought into contact with the other component (17), the two components (11-17) being pre-arranged physically separately and with at least one momentary contact surface, such other component (17) cooperating at least initially with a carrier filler (12-112-28), the procedure being characterized by the fact that the expansion and cure or hardening take place as a result of the diffusion of the component (11) able to expand and harden, through such surface into the space where the other component (17) is present.

2. Procedure to manufacture shaped products composed at least partially of an expanded material (14-16-25-30) as claimed in Claim 1, by which procedure the carrier filler (12-112-28) comprises spaces of a triangular Gibbs channel type at least momentarily.

3. Procedure to manufacture shaped products composed at least partially of an expanded material (14-16-25-30) as claimed in Claim 1 or 2, by which procedure the carrier filler (12-112-28) is at least partially granular or powdered.

4. Procedure to manufacture shaped products composed at least partially of an expanded material (14-16-25-30) as claimed in Claim 1, by which procedure the carrier filler (12-112-28) is at least partially porous.

5. Procedure to manufacture shaped products composed at least partially of an expanded material (14-16-25-30) as claimed in Claim 1, by which procedure the carrier filler (12-112-28) has a fibrous structure.

6. Procedure to manufacture shaped products composed at least partially of an expanded material (14-16-25-30) as claimed on claim 1, by which procedure the carrier filler (12-112-28 is tape-wise (Figs.3).

7. Procedure to manufacture shaped products composed at least partially of an expanded material (14-16-25-30) as claimed in any claim hereinbefore, by which procedure the carrier filler (12-112-28) comprises a covering layer on at least one surface at least momentarily.

8. Procedure to manufacture shaped products composed at least partially of an expanded material (14-16-25-30) as claimed in any claim hereinbefore, by which procedure the expansion and cure or hardening take place at least momentarily in cooperation with a mould (21.121).

9. Procedure to manufacture shaped products composed at least partially of an expanded material (14-16-25-30) as claimed in any claim hereinbefore, by which procedure at least one component (11) is applied by spraying (Figs.2).

10. Procedure to manufacture shaped products composed at least partially of an expanded material (14-16-25-30) as claimed in any of Claims 1 to 8 inclusive, by which procedure at least one component (11) is applied by casting.

11. Procedure to manufacture shaped products composed at least partially of an expanded material (14-16-25-30) as claimed in any claim hereinbefore, by which procedure at least the component (11) able to expand and harden is applied in a layer.

12. Procedure to manufacture shaped products composed at least partially of an expanded material (14-16-25-30) as claimed in any claim hereinbefore, by which procedure the carrier filler (12-112-28) is at least reduced after the cure or hardening.

13. Procedure to manufacture shaped products composed at least partially of an expanded material (14-16-25-30) as claimed in any claim hereinbefore, by which procedure the expansion and cure or hardening take place as far as a depth which can be preset.

14. Procedure to manufacture shaped products composed at least partially of an expanded material (14-16-25-30) as claimed in Claims 1 and 13, by which procedure the depth of expansion and cure or hardening is regulated by means of the quantity of diffusable component applied (11).

15. Procedure to manufacture shaped products composed at least partially of an expanded material (14-16-25-30) as claimed in Claim 13 or 14, by which procedure a cut is made in a non-expanded zone (32) and products (30) are thus obtained having a surface free to accept a diffusable component (11) thereafter.

16. Procedure to manufacture shaped products composed at least partially of an expanded material (14-16-25-30) as claimed in any claim hereinbefore, by which procedure the speed of reaction is conditioned by means of external means.

17. Procedure to manufacture shaped products composed at least partially of an expanded material (14-16-25-30) as claimed in Claims 1 and 16, by which procedure the conditioning of the speed of reaction takes place through heat exchange.

18. Procedure to manufacture shaped products composed at least partially of an expanded material (14-16-25-30) as claimed in Claims 1 and 16, by which procedure the conditioning of the speed of reaction takes place by means of radiations.

19. procedure to manufacture shaped products composed at least partially of an expanded material (14-16-25-30) as claimed in Claim 18, by which procedure the radiations are of radio frequency.

20. Procedure to manufacture shaped products composed at least partially of an expanded material (14-16-25-30) as claimed in any claim hereinbefore, by which procedure at least two components (11-17) are applied in different ways.

21. Product (14-16-25-30) composed at least partially of an expanded material, characterized by being obtained with a procedure according to any of the claims hereinbefore.

22. Product (16-25) as claimed in Claim 21, which has at least one single layer (Figs. 2 and 4b).

23. Product (12-30) as claimed in Claim 21, which comprises at least two differentiated layers.

24. Product (14-16-25-30) as claimed in any of Claims 21 to 23 inclusive, which comprises at least closed cells.

25. Product (14-16-25-30) as claimed in any of Claims 21 to 24 inclusive, which comprises at least open cells.

26. Product (14-16-25-30) as claimed in any of Claims 21 to 25 inclusive, which is applied to a support (31), the expansion and cure or hardening taking place at least partially while the product is being set up for work.

## Revendications

1. Procédé de fabrication de produits façonnés composés au moins partiellement d'un matière expansée (14, 16, 25, 30), laquelle matière expansée est obtenue en partant d'au moins deux composants (11, 17) dont au moins l'un (11) est propre à s'expanser et au moins partiellement polymériser ou durcir lorsqu'il est mis en contact avec l'autre composant (17), les deux composants (11, 17) étant agencés au préalable physiquement séparés et avec au moins une surface de contact momentané, cet autre composant (17) coopérant au moins initialement avec une charge de support (12, 112, 28), le procédé étant caractérisé en ce que l'expansion et la polymérisation ou le durcissement ont lieu en conséquence de la diffusion du composant (11) propre à s'expanser et durcir à travers cette surface dans l'espace où l'autre composant (17) est présent.

2. Procédé de fabrication de produits façonnés composés au moins partiellement d'une, matière expansée (14, 16, 25, 30) suivant la revendication 1, dans lequel procédé la charge de support (12, 112, 28) comprend au moins momentanément des espaces d'un type de canal triangulaire de Gibbs.

3. Procédé de fabrication de produits façonnés composés au moins partiellement d'une matière expansée (14, 16, 25, 30) suivant la revendication 1 ou 2, dans lequel procédé la charge de support (11, 112, 28) est au moins partiellement granulaire ou pulvérulente.

4. Procédé de fabrication de produits façonnés composés au moins partiellement d'une matière expansée (14, 16, 25, 30) suivant la revendication 1, dans lequel procédé la charge de support (12, 112, 28 est au moins partiellement poreuse.

5. Procédé de fabrication de produits façonnés composés au moins partiellement d'une matière expansée (14, 16, 25, 30) suivant la revendication 1, dans lequel procédé la charge de support (12, 112, 28) a une structure fibreuse.

6. Procédé de fabrication de produits façonnés composés au moins partiellement d'une matière expansée (14, 16, 25, 30) suivant la revendication 1, dans lequel procédé la charge de support (12, 112, 28) est en forme de ruban (Fig. 3).

7. Procédé de fabrication de produits façonnés composés au moins partiellement d'une matière expansée (14, 16, 25, 30) suivant l'une quelconque des revendications précédentes, dans lequel procédé la charge de support (12, 112, 28) comprend au moins momentanément une couche de couverture sur au moins une surface.

8. Procédé de fabrication de produits façonnés composés au moins partiellement d'une matière expansée (14, 16, 25, 30) suivant l'une quelconque des revendications précédentes, dans lequel procédé l'expansion et la polymérisation ou le durcissement ont lieu au moins momentanément en coopération avec un moule (21, 121).

9. Procédé de fabrication de produits façonnés composés au moins partiellement d'une matière expansée (14, 16, 25, 30) suivant l'une quelconque des revendications précédentes, dans lequel procédé au moins un composant (11) est appliqué par pulvérisation (Fig. 2).

10. Procédé de fabrication de produits façonnés composés au moins partiellement d'une matière expansée (14, 16, 25, 30) suivant l'une quelconque des revendications 1 à 8 inclusivement, dans lequel procédé au moins un composant (11) est appliqué par coulée.

11. Procédé de fabric façonnés composés au moins partiellement d'une matière expansée (14, 16, 25, 30) suivqnt l'une quelconue revendications précédentes, dans lequel procédé au moins le composant (11) propre à s'expanser et durcir est appliqué en une couche.

12. Procédé de fabrication de produits façonnés composés au moins partiellement d'une matière expansée (14, 16, 25, 30) suivant l'une quelconque des revendications précédentes, dans lequel procédé la charge de support (12, 112, 28) est au moins partiellement raréfiée après la polymérisation ou le durcissement.

13. Procédé de fabrication de produits façonnés composés au moins partiellement d'une matière expansée (14, 16, 25, 30) suivant l'une quelconque des revendications précédentes, dans lequel procédé l'expansion et la polymérisation ou le durcissement ont lieu jusqu'à une profondeur qui peut être imposée au préalable.

14. Procédé de fabrication de produits façonnés composés au moins partiellement d'une matière expansée (14, 16, 25, 30) suivant les revendications 1 et 13, dans lequel procédé la profondeur d'expansion et de polymérisation ou de durcissement est réglée au moyen de la quantité de composant diffusible (11) appliquée.

15. Procédé de fabrication de produits façonnés composés au moins partiellement d'une matière expansée (14, 16, 25, 30) suivant la revendication 13 ou 14, dans lequel procédé une entaille est pratiquée dans une zone non expansée (32) et des produits (30) sont ainsi formés, qui présentent une surface libre pour accepter ensuite un composant diffusible (11).

16. Procédé de fabrication de produits façonnés composés au moins partiellement d'une matière expansée (14, 16, 25, 30) suivant l'une quelconque des revendications précédentes, dans lequel procédé la vitesse de réaction est influencée à l'aide d'un agent extérieur.

17. Procédé de fabrication de produits façonnés composés au moins partiellement d'une matière expansée (14, 16, 25, 30) suivant les revendications 1 et 16, dans lequel procédé l'influence sur la vitesse de réaction est exercée par échange de chaleur.

18. Procédé de fabrication de produits façonnés composés au moins partiellement d'une matière expansée (14, 16, 25, 30) suivant les revendications 1 et 16, dans lequel procédé l'influence sur la vitesse de réaction est exercée par des rayonnements.

19. Procédé de fabrication de produits façonnés composés au moins partiellement d'une matière expansée (14, 16, 25, 30) suivant la revendication 18, dans lequel procédé les rayonnements sont de radiofréquence.

20. Procédé de fabrication de produits façonnés composés au moins partiellement d'une matière expansée (14' 16, 25, 30) suivant l'une quelconque des revendications précédentes, dans lequel procédé au moins deux composants (11, 17) sont appliqués suivant des façons différentes.

21. Produit (14, 16, 25, 30) composé au moins partiellement d'une matière expansée, caractérisé en ce qu'il a été fabriqué par un procédé suivant l'une quelconque des revendications précédentes.

22. Produit (16, 25) suivant la revendication 21, qui comprend au moins une couche unique (Fig. 2 et 4b).

23. Produit (14, 30) suivant la revendication 21, qui comprend au moins deux couches différenciées.

24. Produit (14, 16, 25, 30) suivant l'une quelconque des revendications 21 à 23 inclusivement, qui comprend au moins des cellules fermées.

25. Produit (14, 16, 25, 30) suivant l'une quelconque des revendications 21 à 24 inclusivement, qui comprend au moins des cellules ouvertes.

26. Produit (14, 16, 25, 30) suivant l'une quelconque des revendications 21 à 25 inclusivement, qui est appliqué sur un appui (31), l'expansion et la polymérisation ou le durcissement ayant lieu au moins partiellement tandis que le produit est mis en place pour le travail.

**Patentansprüche**

1. Verfahren zum Herstellen geformter produkte, die zumindest zum Teil aus expandiertem Material (14-16-25-30) bestehen, wobei dieses expandierte Material ausgehend von zumindest zwei Komponenten (11-17) erhalten wird, von denen zumindest eine (11) expandieren und zumindest teilweise vulkanisieren oder aushärten kann, wenn sie in Kontakt mit der anderen Komponente gebracht wird, die beiden Komponenten (11-17) physikalisch getrennt vorbereitet werden, mit zumindest einer voriibergehenden Kontaktfläche, die andere Komponente zumindest anfänglich mit einem Trägerfüllstoff (12-112-28) zusammenwirkt und das Verfahren dadurch gekennzeichnet ist, daß die Expansion und das Vulkanisieren oder Aushärten als Folge der Diffusion jener Komponente (11), die expandieren und aushärten kann, durch diese Fläche in den Raum, in dem sich die andere Komponente (17) befindet, erfolgen.

2. Verfahren zum Herstellen geformter Produkte, die zumindest zum Teil aus expandiertem Material (14-16-25-30) bestehen, nach Anspruch 1, bei welchem der Trägerfüllstoff (12-112-28) zumindest vorübergehend Hohlräume vom Typ eines dreieckigen Gibbs-Kanals aufweist.

3. Verfahren zum Herstellen geformter produkte, die zumindest zum Teil aus expandiertem Material (14-16-25-30) bestehen, nach Anspruch 1 oder 2, bei welchem der Trägerfüllstoff (12-112-28) zumindest zum Teil ein Granulat oder Pulver ist.

4. Verfahren zum Herstellen geformter Produkte, die zumindest zum Teil aus expandiertem Material (14-16-25-30) bestehen, nach Anspruch 1, bei welchem der Trägerfüllstoff (12-112-28) zumindest zum Teil porös ist.

5. Verfahren zum Herstellen geformter Produkte, die zumindest zum Teil aus expandiertem Material (14-16-25-30) bestehen, nach Anspruch 1, bei welchem der Trägerfüllstoff (12-112-28) zumindest zum Teil Faserstruktur besitzt.

6. Verfahren zum Herstellen geformter Produkte, die zumindest zum Teil aus expandiertem Material (14-16-25-30) bestehen, nach Anspruch 1, bei welchem der Trägerfüllstoff (12-112-28) bandartig ist (Fig. 3).

7. Verfahren zum Herstellen geformter produkte, die zumindest zum Teil aus expandiertem Material (14-16-25-30) bestehen, nach irgendeinem der vorgehenden Ansprüche, bei welchem der Trägerfüllstoff (12-112-28) auf zumindest einer Fläche zumindest vorübergehend eine Decklage aufweist.

8. Verfahren zum Herstellen geformter produkte, die zumindest zum Teil aus expandiertem Material (14-16-25-30) bestehen, nach irgendeinem der vorgehenden Ansprüche, bei welchem das Expandieren und Vulkanisieren oder Aushärten zumindest vorübergehend in Zusammenwirken mit einer Form (21-121) erfolgt.

9. Verfahren zum Herstellen geformter Produkte, die zumindest zum Teil aus expandiertem Material (14-16-25-30) bestehen, nach irgendeinem der vorgehenden Ansprüche, bei welchem zumindest eine Komponente (11) durch Sprühen aufgebracht wird (Fig. 2).

10. Verfahren zum Herstellen geformter produkte, die zumindest zum Teil aus expandiertem Material (14-16-25-30) bestehen, nach einem der Ansprüche 1 bis 8, bei welchem zumindest eine Komponente (11) durch Gießen eingebracht wird.

11. Verfahren zum Herstellen geformter Produkte, die zumindest zum Teil aus expandiertem Material (14-16-25-30) bestehen, nach irgendeinem der vorgehenden Ansprüche, bei welchem zumindest jene Komponente (11), die expandieren und aushärten kann, in einer Schicht aufgebracht wird.

12. Verfahren zum Herstellen geformter Produkte, die zumindest zum Teil aus expandiertem Material (14-16-25-30) bestehen, nach irgendeinem der vorgehenden Ansprüche, bei welchem der Trägerfüllstoff (12-112-28) nach dem Vulkanisieren oder Aushärten zumindest teilweise reduziert wird.

13. Verfahren zum Herstellen geformter Produkte, die zumindest zum Teil aus expandiertem Material (14-16-25-30) bestehen, nach irgendeinem der vorgehenden Ansprüche, bei welchem das Expandieren und das Vulkanisieren oder Aushärten bis zu einer vorwählbaren Tiefe stattfindet.

14. Verfahren zum Herstellen geformter Produkte, die zumindest zum Teil aus expandiertem Material (14-16-25-30) bestehen, nach den Ansprüchen 1 und 13, bei welchem die Tiefe des Expandierens und des Vulkanisierens oder Aushärtens über die Menge der verwendeten diffundierfähigen Komponente (11) eingestellt wird.

15. Verfahren zum Herstellen geformter Produkte, die zumindest zum Teil aus expandiertem Material (14-16-25-30) bestehen, nach Anspruch 13 oder 14, bei welchem in einen nicht expandierten Bereich (32) ein Schnitt gemacht wird und so Produkte (30) erhalten werden, die eine freie Oberfläche zur folgenden Aufnahme einer diffundierfähigen Komponente (11) besitzen.

16. Verfahren zum Herstellen geformter Produkte, die zumindest zum Teil aus expandiertem Material (14-16-25-30) bestehen, nach irgendeinem der vorgehenden Ansprüche, bei welchem die Reaktionsgeschwindigkeit mittels äußerer Einrichtungen festgelegt wird.

17. Verfahren zum Herstellen geformter Produkte, die zumindest zum Teil aus expandiertem Material (14-16-25-30) bestehen, nach Anspruch 1 und 16, bei welchem das Festlegen der Reaktionsgeschwindigkeit durch Wärmeaustausch erfolgt.

18. Verfahren zum Herstellen geformter Produkte, die zumindest zum Teil aus expandiertem Material (14-16-25-30) bestehen, nach Anspruch 1 und 16, bei welchem das Festlegen der Reaktionsgeschwindigkeit durch Strahlung erfolgt.

19. Verfahren zum Herstellen geformter Produkte, die zumindest zum Teil Aus expandiertem Material (14-16-25-30) bestehen, nach Anspruch 18, bei welchem die Strahlung im Hochfrequenzbereich liegt.

20. Verfahren zum Herstellen geformter Produkte, die zumindest zum Teil aus expandiertem Material (14-16-25-30) bestehen, nach irgendeinem der vorgehenden Ansprüche, bei welchem zumindest zwei Komponenten (11-17) auf verschiedene Art eingesetzt werden.

21. Produkt (14-16-25-30), zumindest zum Teil aus expandiertem Material bestehend, dadurch gekennzeichnet, daß es durch ein Verfahren nach irgendeinem der vorgehenden Ansprüche erhalten wird.

22. Produkt (16-25) nach Anspruch 21, das zumindest eine einzige Schicht besitzt (Fig. 2 und 4h).

23. Produkt (12-30) nach Anspruch 21, das zumindest zwei verschiedene Schichten enthält.

24. Produkt (14-16-25-30) nach einem der Ansprüche 21 bis 23, das zumindest geschlossene Zellen Aufweist.

25. Produkt (14-16-25-30) nach einem der Ansprüche 21 bis 24, das zumindest offene Zellen aufweist.

26. Produkt (14-16-25-30) nach einem der Ansprüche 21 bis 25, das auf eine Auflage (31) aufgebracht ist, wobei das Expandieren und Vulkanisieren oder Aushärten zumindest zum Teil stattfindet, während das Produkt aufgebracht wird.

fig.1

fig.2

Fig.3

fig. 4 a

fig. 4 b

fig. 5 a

fig. 5 b

fig. 5 c